# EUROPEAN PATENT APPLICATION

(11) **EP 4 528 471 A1**
(43) Date of publication of application: **26.03.2025**
(21) Application number: 24196112.7
(22) Date of filing: 23.08.2024
(51) Int. Cl.: G06F 3/06, G06F 12/02

(54) **PARALLELIZED RECOVERY OF LOGICAL BLOCK ADDRESS (LBA) TABLES**

(30) Priority: 19.09.2023 US 202318370346
(71) Applicant: VMware LLC, Palo Alto, CA 94304 (US)
(72) Inventor: Aithal, Prasanna, 560076 Bengaluru (IN); Shantharam, Srinivasa, 560076 Bengaluru (IN); Saikia, Samiran, 560076 Bengaluru (IN); N B, Venugopal, 560076 Bengaluru (IN)
(74) Representative: Dilg, Haeusler, Schindelmann Patentanwaltsgesellschaft mbH

(57) **Abstract**

Some implementations herein relate to data storage. For example, a method may include receiving a first input/output (I/O) operation indicating a first logical block address (LBA) of a single address space, where the single address space corresponds to storage across a first plurality of storage devices. The method may also include determining that a first LBA table of a plurality of LBA tables is associated with the first LBA, where each of the plurality of LBA tables is associated with a different corresponding portion of the single address space. The method may include storing data corresponding to the first I/O operation at a first physical address of a first storage device of a second plurality of storage devices. Additionally, the method may include adding a first entry to the first LBA table, the first entry mapping the first LBA to the first physical address.

## Description

### Background

In the field of data storage, a storage area network (SAN) is a dedicated, independent high-speed network that interconnects and delivers shared pools of storage devices to multiple servers. A virtual SAN (VSAN) may aggregate local or direct-attached data storage devices, to create a single storage pool shared across all hosts in a host cluster. This pool of storage (sometimes referred to herein as a "datastore" or "data storage") may allow virtual machines (VMs) running on hosts in the host cluster to store virtual disks that are accessed by the VMs during their operations. The VSAN architecture may be a two-tier datastore including a performance tier for the purpose of read caching and write buffering and a capacity tier for persistent storage.

The VSAN datastore may manage storage of virtual disks at a block granularity. For example, VSAN may be divided into a number of physical blocks (e.g., 4096 bytes or "4 KB" size blocks), each physical block having a corresponding physical block address (PBA) that indexes the physical block in storage. Physical blocks of the VSAN may be used to store blocks of data (also referred to as data blocks) used by VMs, which may be referenced by logical block addresses (LBAs). Each block of data may have an uncompressed size corresponding to a physical block. Blocks of data may be stored as compressed data or uncompressed data in the VSAN, such that there may or may not be a one to one correspondence between a physical block in VSAN and a data block referenced by a logical block address.

Each host may include a storage management module (referred to herein as a "VSAN module") to handle input/output (I/O) write or read requests of data blocks in the VSAN. For example, an I/O request to write a block of data may be received by the VSAN module, and through a distributed object manager (DOM) sub-module of the VSAN module, the data may be stored in the cache tier, and later flushed to the capacity tier of the VSAN.

Additionally, each host may include a single LBA table including a mapping between the LBAs for which data is stored in at least one disk (e.g., corresponding to the cache tier and/or capacity tier) of the host, and one or more of 1) a physical address (e.g., PBA) of a cache tier disk where data associated with the LBA is stored; or 2) a physical address of a capacity tier disk where data associated with the LBA is currently stored or is going to be stored after flushing from the cache tier disk. The LBA table is stored in local memory of the host to facilitate fast lookup and updating. However, since the local memory is volatile, any system failure in which a power cycle occurs, such as for example, a hard system crash or a power outage, can lead to a loss of the LBA table. It should be noted that while the underlying data is not actually lost since it may be stored in non-volatile storage of the VSAN, without the LBA table to perform translation between the LBAs and physical addresses, the fast lookup functionally may be lost. An I/O logging system may be implemented to mitigate the data loss, by logging I/O operations along with the LBA/physical address information. Thus, when a system failure occurs, a recovery process can be initiated whereby the log data is processed to reconstruct the LBA table. Unfortunately the recovery process can be a lengthy process, since the log data needs to be read serially and entries to the new LBA table can only be added or updated serially as well. Such a recovery process can take an hour or more to complete.

It should be noted that the information included in the Background section herein is simply meant to provide a reference for the discussion of certain embodiments in the Detailed Description. None of the information included in this Background should be considered as an admission of prior art.

### Summary of the Invention

One or more embodiments provide a method for data storage. For example, the method may include receiving a first input/output (I/O) operation indicating a first logical block address (LBA) of a single address space, where the single address space corresponds to storage across a first plurality of storage devices. The method may also include determining that a first LBA table of a plurality of LBA tables is associated with the first LBA, where each of the plurality of LBA tables is associated with a different corresponding portion of the single address space. The method may furthermore include storing data corresponding to the first I/O operation at a first physical address of a first storage device of a second plurality of storage devices. Additionally, the method may include adding a first entry to the first LBA table, the first entry mapping the first LBA to the first physical address.

Further embodiments include one or more non-transitory computer-readable media comprising instructions that, when executed by one or more processors of a computer system, cause the computer system to carry out the above method(s). Further embodiments include a computer system comprising at least one memory and one or more processors configured to carry out the above method(s).

### Brief Description of the Drawings

Figure 1 is a diagram illustrating an example computing environment in which embodiments of the present application may be practiced.
Figure 2 is a block representation of a structure of a log block in accordance with embodiments of the present application.
Figure 3 is a flowchart illustrating an embodiment of a data storage method in accordance with an example embodiment of the present application.
Figure 4 is a flowchart illustrating an embodiment of a LBA table recovery method in accordance with an example embodiment of the present application.
Figure 5 is a diagram illustrating an example of a relationship between LBA tables and datastores in accordance with an example embodiment of the present application.
Figure 6 is a diagram illustrating another example of a relationship between LBA tables and datastores in accordance with an example embodiment of the present application.
Figure 7 is a process diagram illustrating an example processing of a chain of log blocks to recover LBA tables in accordance with the present application.

### Detailed Description

Aspects of the present disclosure introduce a data storage structure in which a plurality of LBA tables are implemented to map LBAs to physical addresses of where data associated with the LBAs is stored. In particular, techniques are provided whereby a plurality of LBA tables are used for a single address space (e.g., a logical address space corresponding to LBAs associated with a plurality of capacity tier disks of a host) corresponding to storage across a plurality of capacity tier disks of a host. Accordingly, instead of a single LBA table providing a mapping of LBAs to physical addresses, a plurality of LBA tables provide such mapping. Each LBA table of the plurality of LBA tables is associated with a different portion of the single address space, such as LBAs of the address space stored on a particular physical disk of the capacity tier, or different sets of contiguous LBAs of the address space. Implementing a data storage structure with a plurality of LBA tables facilitates parallelization of a data recovery process after a system failure, thus reducing the length of time during which the host is unavailable to users.

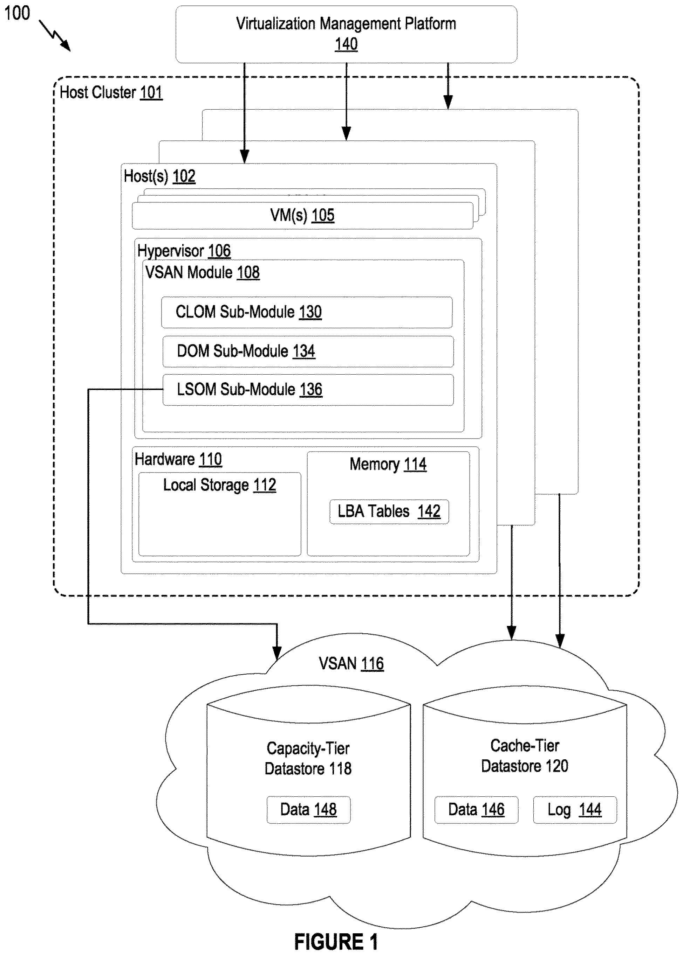

Figure 1 is a diagram illustrating an example computing environment 100 in which embodiments of the present disclosure may be practiced. As shown, computing environment 100 may include a distributed object-based datastore, such as a software-based "virtual storage area network" (VSAN) environment 116 that leverages the commodity local storage 112 housed in or directly attached (hereinafter, use of the term "housed" or "housed in" may be used to encompass both housed in or otherwise directly attached) to host(s) 102 of a host cluster 101 to provide an aggregate object storage to virtual machines (VMs) 105 running on the host(s) 102. The local commodity storage 112 housed in the hosts 102 may include combinations of solid state drives (SSDs) or non-volatile memory express (NVMe) drives, magnetic or spinning disks or slower/cheaper SSDs, or other types of storages.

Additional details of VSAN are described in U.S. Patent No. 10,509.708, the entire contents of which are incorporated by reference herein for all purposes, and U.S. Patent No. 11,687,236, the entire contents of which are incorporated by reference herein for all purposes.

As described herein, in some cases, VSAN 116 is configured to store virtual disks of VMs 105 as data blocks in a number of physical blocks each having a physical address (e.g., PBA) that indexes the physical block in storage. VSAN modules 108 may create an "object" for a specified data block by backing it with physical storage resources of a physical disk (e.g., based on a defined policy).

VSAN 116 may be a two-tier datastore, thereby storing the data blocks in both a smaller, but faster, performance tier (e.g., cache-tier datastore 120) and a larger, but slower, capacity-tier datastore 118. The data in the cache-tier 120 may be stored at first data blocks 146, and when the size of data reaches a threshold, the data may be written to the capacity-tier 118 at second data blocks 148. Accordingly, SSDs may serve as a read cache and/or write buffer in the cache-tier 120 in front of slower/cheaper SSDs (or magnetic disks) in the capacity-tier 118 to enhance I/O performance. In some embodiments, both cache-tier 120 and capacity-tier 118 may leverage the same type of storage (e.g., SSDs) for storing the data and performing the read/write operations. Additionally, SSDs may include different types of SSDs that may be used in different tiers in some embodiments. For example, the data in the cache-tier 120 may be written on a single-level cell (SLC) type of SSD, while the capacity-tier 118 may use a quad-level cell (QLC) type of SSD for storing the data. Write bandwidth in a QLC type of storage may be substantially lower than the read bandwidth (e.g., 400 MB/s to 2200 MB/s), and a QLC storage may be randomly written with 64 KB, or even 128 KB write without causing write amplifications. These attributes make QLC storages a very desirable candidate for writes which require a big volume of data being written to the storage at once.

Accordingly, the local storage 112 of a given host 102 includes a plurality of storage devices (e.g., disks) that form part of the cache-tier datastore 120, and a plurality of storage devices that form part of the capacity-tier datastore 118.

As further discussed below, each host 102 may include a storage management module (referred to herein as a VSAN module 108) in order to automate storage management workflows (e.g., create cache-tier data blocks 146 and capacity-tier data blocks 148 of VSAN 116, etc.) and provide access to data (e.g., handle I/O operations to data in cache-tier data blocks 146 and capacity-tier data blocks 148 of VSAN 116, etc.) based on predefined storage policies specified for data in the physical disks. For example, because a VM 105 may be initially configured by an administrator to have specific storage requirements for its "virtual disk" depending on its intended use (e.g., capacity, availability, I/O operations per second (IOPS), etc.), the administrator may define a storage profile or policy for each VM 105 specifying such availability, capacity, IOPS and the like.

A virtualization management platform 140 is associated with host cluster 101. Virtualization management platform 140 enables an administrator to manage the configuration and spawning of VMs 105 on the various hosts 102. As illustrated in Figure 1, each host 102 includes a virtualization layer or hypervisor 106, a VSAN module 108, and hardware 110 (which includes local storage 112 (e.g., SSDs) and volatile memory 114 of a host 102). Through hypervisor 106, a host 102 is able to launch and run multiple VMs 105. Hypervisor 106, in part, manages hardware 110 to properly allocate computing resources (e.g., processing power, random access memory (RAM), etc.) for each VM 105. Furthermore, as described below, each hypervisor 106, through its corresponding VSAN module 108, provides access to storage resources located in hardware 110 (e.g., local storage 112, memory 114) for use as storage for virtual disks (or portions thereof) and other related files that may be accessed by any VM 105 residing in any of hosts 102 in host cluster 101.

In one embodiment, VSAN module 108 may be implemented as a "VSAN" device driver within hypervisor 106. In such an embodiment, VSAN module 108 may provide access to a conceptual "VSAN" through which an administrator can create a number of top-level "device" or namespace objects that are backed by the cache-tier 120 and capacity-tier 118 datastores of VSAN 116. By accessing application programming interfaces (APIs) exposed by VSAN module 108, hypervisor 106 may determine all the top-level file system objects (or other types of top-level device objects) currently residing in VSAN 116.

A file system object may, itself, provide access to a number of virtual disk descriptor files accessible by VMs 105 running in host cluster 101. These virtual disk descriptor files may contain references to virtual disk "objects" that contain the actual data for the virtual disk and are separately backed by the cache-tier 120 and capacity-tier 118 datastores. A virtual disk object may itself be a hierarchical, "composite" object that is further composed of "component" objects that reflect the storage requirements (e.g., capacity, availability, IOPs, etc.) of a corresponding storage profile or policy generated by the administrator when initially creating the virtual disk. Each VSAN module 108 (through a cluster level object management or "CLOM" sub-module 130) may communicate with other VSAN modules 108 of other hosts 102.

Various sub-modules of VSAN module 108, including, in some embodiments, CLOM sub-module 130, distributed object manager (DOM) 134, and/or local storage object manager (LSOM) 136, handle different responsibilities. CLOM sub-module 130 generates virtual disk blueprints during creation of a virtual disk by a user (e.g., an administrator) and ensures that objects created for such virtual disk blueprints are configured to meet storage profile or policy requirements set by the user. In addition to being accessed during object creation (e.g., for virtual disks), CLOM sub-module 130 may also be accessed (e.g., to dynamically revise or otherwise update a virtual disk blueprint or the mappings of the virtual disk blueprint to actual physical storage in physical disks of the VSAN 116) on a change made by a user to the storage profile or policy relating to an object or when changes to the cluster or workload result in an object being out of compliance with a current storage profile or policy.

In one embodiment, if a user creates a storage profile or policy for a virtual disk object, CLOM sub-module 130 applies a variety of heuristics and/or distributed algorithms to generate a virtual disk blueprint that describes a configuration in host cluster 101 that meets or otherwise suits a storage policy. In some cases, the storage policy may define attributes such as a failure tolerance, which defines the number of host and device failures that a VM can tolerate. In some embodiments, a redundant array of inexpensive disks (RAID) configuration may be defined to achieve desired redundancy through mirroring and access performance through erasure coding (EC). EC is a method of data protection in which each copy of a virtual disk object is partitioned into stripes, expanded and encoded with redundant data pieces, and stored across different hosts 102 of VSAN 116. For example, a virtual disk blueprint may describe a RAID 1 configuration with two mirrored copies of the virtual disk (e.g., mirrors) where each are further striped in a RAID 0 configuration. Each stripe may contain a plurality of data blocks (e.g., four data blocks in a first stripe). In some cases, including RAID 5 and RAID 6 configurations, each stripe may also include one or more parity blocks. Accordingly, CLOM sub-module 130, in one embodiment, may be responsible for generating a virtual disk blueprint describing a RAID configuration.

CLOM sub-module 130 may communicate the blueprint to its corresponding DOM sub-module 134. The DOM sub-module 134 may interact with objects in VSAN 116 to implement the blueprint by, for example, allocating or otherwise mapping component objects of the virtual disk object to physical storage locations within various hosts 102 of host cluster 101. DOM sub-module 134 may also determine the hosts 102 that store the component objects of a corresponding virtual disk object and the paths by which those hosts 102 are reachable in order to satisfy the I/O operation.

When handling I/O operations from VM 105, due to the hierarchical nature of virtual disk objects in certain embodiments, DOM sub-module 134 may need to further communicate across the network (e.g., local area network (LAN), or WAN) with a different DOM sub-module 134 in a second host 102 (or hosts 102) that serves as the coordinator for the particular virtual disk object that is stored in the local storage 112 of the second host 102 (or hosts 102) and which is the portion of the virtual disk that is subject to the I/O operation. If the VM 105 issuing the I/O operation resides on a host 102 that is also different from the coordinator of the virtual disk object, the DOM sub-module 134 of the host 102 running the VM 105 may also have to communicate across the network (e.g., LAN or WAN) with the DOM sub-module 134 of the coordinator. DOM sub-modules 134 may also similarly communicate amongst one another during object creation (and/or modification).

DOM sub-module 134 may interact with a local storage object manager (LSOM) sub-module 136 that serves as the component in VSAN module 116 that may actually drive communication with the local SSDs (and, in some cases, magnetic disks) of its host 102. In addition to allocating local storage 112 for virtual disk objects (as well as storing other metadata, such as policies and configurations for composite objects for which its node serves as coordinator, etc.), LSOM sub-module 136 may additionally monitor the flow of I/O operations to local storage 112 of its host 102, for example, to report whether a storage resource is congested. LSOM sub-module 136 may maintain a log 144 of I/O operations performed by the host 102. LSOM sub-module 136 may store its corresponding log 144 in one or more local disks of local storage 112 of its host 102 that make up part of the cache-tier datastore 120.

Further, LSOM sub-module 136 may maintain a plurality of LBA tables 142 stored in local memory 114 of its host 102. As discussed, in certain aspects, the plurality of LBA tables 142 may be used for a single address space corresponding to a plurality of disks of local storage 112 of the host 102 of the LSOM sub-module 136 that make up part of the capacity-tier datastore 118. In particular, in certain aspects, the plurality of LBA tables 142 are used to map LBAs corresponding to the single address space to physical addresses of disks of local storage 112 of the host 102 of the LSOM sub-module 136 that make up part of the capacity-tier datastore 118. Further, in certain aspects, the plurality of LBA tables 142 are used to map LBAs corresponding to the single address space to physical addresses of disks of local storage 112 of the host 102 of the LSOM sub-module 136 that make up part of the cache-tier datastore 120. For example, for a given host 102, the plurality of LBA tables 142 include entries for LBAs for which corresponding data is stored in local storage 112 of the host 102. In certain aspects, each entry maps an LBA to both a physical address of where the corresponding data is stored in a local disk of host 102 corresponding to the cache-tier datastore 120, and a physical address of where the corresponding data is stored or will be stored in a local disk of host 102 corresponding to the capacity-tier datastore 118.

For example, when LSOM sub-module 136 of a given host 102 receives an I/O operation (e.g., from DOM sub-module 134) to store data, the I/O operation includes an LBA indicating a logical address of where the data is to be stored. The LSOM sub-module 136 may write the data to a physical location (e.g., physical block) of a local cache-tier disk of the local storage 112 of the host 102 (i.e., a local disk of the local storage 112 of the host 102, where the local disk makes up part of the cache-tier datastore 120). The LSOM sub-module 136 may further determine (but may not write the data to at first) a physical location to store the data of a local capacity-tier disk of the local storage 112 of the host 102 (i.e., a local disk of the local storage 112 of the host 102, where the local disk makes up part of the capacity-tier datastore 118). The LSOM sub-module 136 may create an entry in log 144 that indicates at least the LBA, the data (also referred to as a payload), the physical address of the physical location of the local capacity-tier disk, and the physical address of the physical location of the local cache-tier disk. In addition, the LSOM sub-module 136 may generate an entry in one of the plurality of LBA tables 142, the entry mapping the LBA to the physical address of the physical location of the local capacity-tier disk and the physical address of the physical location of the local cache-tier disk. At some point in time, such as based on an I/O for the LBA not being received for a threshold period of time at LSOM sub-module 136, the LSOM sub-module 136 may flush the data associated with the LBA from the physical location in the local cache-tier disk to the physical location in the local capacity-tier disk. The corresponding entry from the plurality LBA tables 142 may be removed. The corresponding entry in log 144 may also be removed. Further, the flushing may remove the data associated with the LBA from the physical location in the local cache-tier disk.

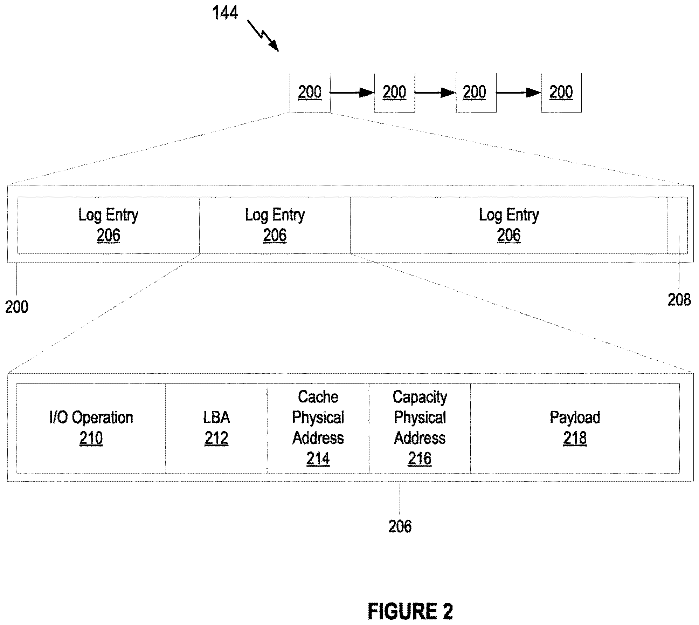

The log 144 may be stored in any suitable manner. In certain embodiments, log 144 may be stored as a structure similar to a linked list. Figure 2 illustrates an example embodiment of log 144 having a structure similar to a linked list. As shown, log 144 is stored as a one or more blocks 200. Each block 200 may be stored in a corresponding physical block of one or more local cache-tier disks. In certain aspects, multiple blocks 200 may be stored in contiguous physical blocks of local cache-tier disk(s), as further discussed herein, to improve read performance of log 144.

Each block 200 includes one or more log entries 206, and, in some cases, a pointer 208 indicating an address of a physical block of a local cache-tier disk where a next block 200 of log 144 is stored. In Figure 2, three log entries 206 are shown, however the number of log entries 206 held in an individual block 200 is dependent on the size of the individual log entries 206, as each log entry 206 is of an arbitrary length determined by the content of the log entry 206. As discussed, each log entry 206 includes an identifier of a type of I/O operation 210 (e.g., write, delete, etc.), an LBA 212, a physical address 214 in a local cache-tier disk, a physical address 216 in a local capacity-tier disk, and in some cases (e.g., for a write), a payload 218.

In certain aspects, a starting block 200 of log 144 includes one or more log entries 206 of log 144. The starting block 200 is stored in a physical block of a local cache-tier disk. The address of the physical block storing starting block 200 may be maintained by LSOM sub-module 136 such as a fixed address. In certain aspects, to read log 144, LSOM sub-module 136 starts by reading starting block 200 of log 144 using the maintained address. Further, LSOM sub-module 136 reads pointer 208 in starting block 200 of log 144. Pointer 208 indicates an address of a physical block of a local cache-tier disk where a next block 200 of log 144 is stored, and LSOM sub-module 136 reads the next block 200. Accordingly, by iteratively reading a block 200, and using the pointer 208 to then read a next block 200, LSOM sub-module 136 can traverse/read all of log 144.

However, in certain aspects, the process of reading a block 200, reading a pointer 208, and then using the pointer 208 to issue another read can cause delay in reading blocks 200. Accordingly, in certain aspects, a plurality of blocks 200 (e.g., all blocks 200 of log 144, a fixed number of blocks 200, etc.) may be stored contiguously in contiguous physical blocks (e.g., corresponding to contiguous PBAs) of a local cache-tier disk. Accordingly, LSOM sub-module 136 can read the contiguous physical blocks to read the contiguous plurality of blocks 200, without having to read pointers 208, thus reducing latency. For example, where the number of contiguous blocks 200 is four, four blocks 200 may be stored in four contiguous physical blocks. In certain aspects, only one of the four contiguous physical blocks may include a pointer 208 to a next four contiguous physical blocks.

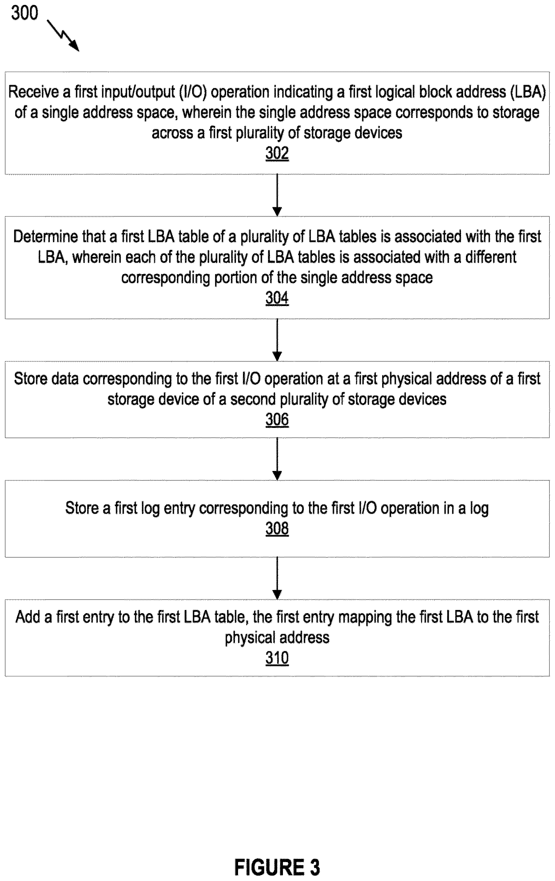

Figure 3 illustrates a flowchart of an example process 300 for LSOM sub-module 136 to process an I/O operation.

At 302, LSOM sub-module 136 receives a first input/output (I/O) operation indicating a first LBA of a single address space. The single address space corresponds to storage across a first plurality of storage devices, such as a plurality of capacity-tier disks of a local storage 112 of a host 102.

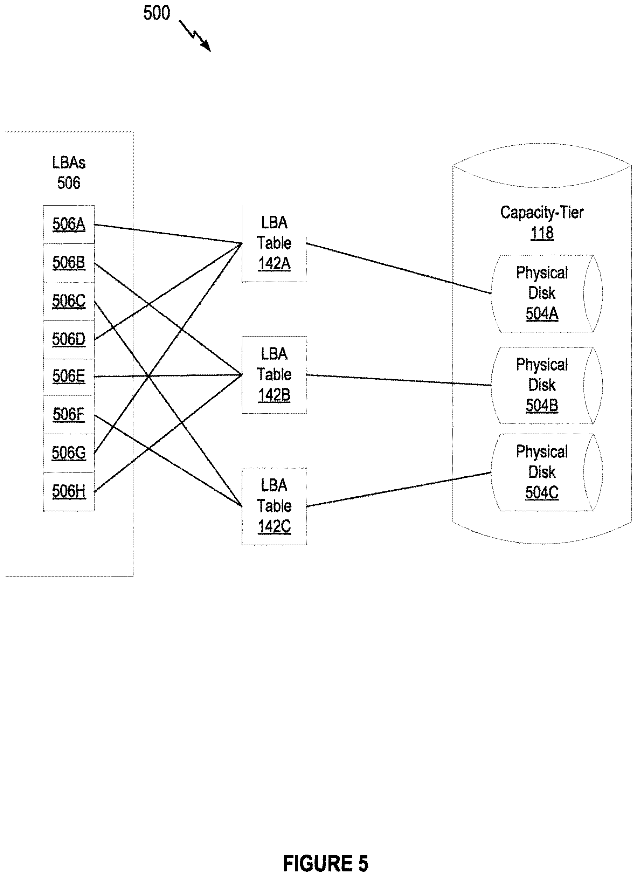

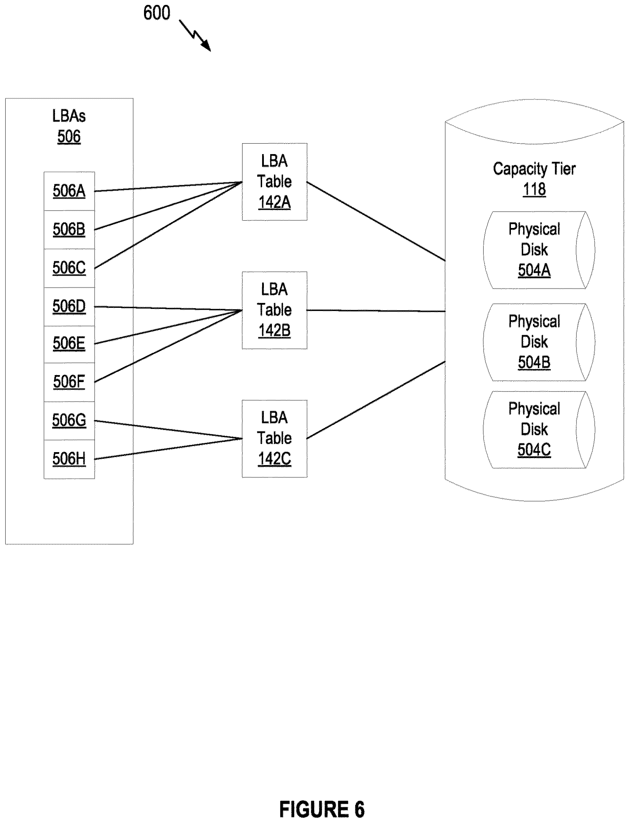

At 304, LSOM sub-module 136 determines that a first LBA table of a plurality of LBA tables 142 is associated with the first LBA. In particular, each of the plurality of LBA tables 142 is associated with a different corresponding portion of the single address space, such as further described with respect to Figures 5 and 6. In certain aspects, LSOM sub-module 136 determines with which LBA table of the plurality of LBA tables 142 the first LBA is associated based on a value of the first LBA. For example, the value of the first LBA, or a portion of the first LBA may be hashed to an index value that identifies an LBA table of the plurality of LBA tables 142. In another example, different LBA tables 142 may be associated with different sets (e.g., contiguous sets) of LBAs. In another example, a portion of an LBA (e.g., one or more bits, such as X most significant bits, Y least significant bits, and/or the like) may be used as an identifier of a physical disk of the plurality of capacity-tier disks, and each LBA table may be associated with a different capacity-tier disk, such that the portion of the LBA is associated with a particular LBA table.

At 306, LSOM sub-module 136 stores data corresponding to the first I/O operation (e.g., a payload of the first I/O operation) at a first physical address of a first storage device of a second plurality of storage devices, such as a plurality of cache-tier disks of the local storage 112 of the host 102.

At 308, LSOM sub-module 136 stores a first log entry (e.g., log entry 206 in Figure 2) corresponding to the first I/O operation in a log (e.g., log 144 in Figure 1), which may be stored in the second plurality of storage devices, such as the plurality of cache-tier disks of the local storage 112 of the host 102.

At 310, LSOM sub-module 136 adds a first entry to the first LBA table. The first entry maps the first LBA to the first physical address (e.g., where the data is stored in the cache-tier disk). In certain aspects, the first entry further maps the first LBA to a second physical address of a second storage device of the first plurality of storage devices, such as a plurality of capacity-tier disks of a local storage 112 of a host 102. Accordingly, as discussed, the first entry of the first LBA table may map the first LBA to a physical address of a capacity-tier disk and a physical address of a cache-tier disk.

In certain aspects, process 300 may be repeated for multiple I/O operations, thereby building the plurality of LBA tables 142.

In certain aspects, as discussed, the plurality of LBA tables 142 may be lost, such as due to a failure of a host 102 storing the plurality of LBA tables 142. In certain aspects, LSOM sub-module 136 may be configured to use log 144 to recover the plurality of LBA tables 142. In particular, log entries 206 of log 144 may be used to recover the plurality of LBA tables 142. LSOM sub-module 136 may read log entries 206 of log 144 (e.g., all log entries 206, log entries of a particular I/O operation type, etc.) to determine a corresponding LBA 212, a physical address 214 in a local cache-tier disk, and a physical address 216 in a local capacity-tier disk. LSOM sub-module 136 may accordingly generate for each of the log entries 206, a corresponding entry in the plurality of LBA tables 142 that maps the LBA 212 to the physical address 214 in the local cache-tier disk and the physical address 216 in a local capacity-tier disk. Different techniques may be used to determine which of the plurality of LBA tables 142 an entry is added to, as further discussed herein. Accordingly, by reading log 144, LSOM sub-module 136 may recover the plurality of LBA tables 142.

In certain aspects, to increase the speed with which the plurality of LBA tables 142 are recovered, recovery of the plurality of LBA tables 142 may be parallelized. For example, multiple log entries 206 may be processed in parallel (e.g., by multiple threads), to generate entries in the plurality of LBA tables 142 in parallel. In certain aspects, each thread may be used to generate entries for a corresponding LBA table of the plurality of LBA tables 142. In particular, by having a plurality of LBA tables 142, instead of a single LBA table across an address space, the recovery of entries can be parallelized across the plurality of LBA tables 142 instead of being serialized across a single LBA table.

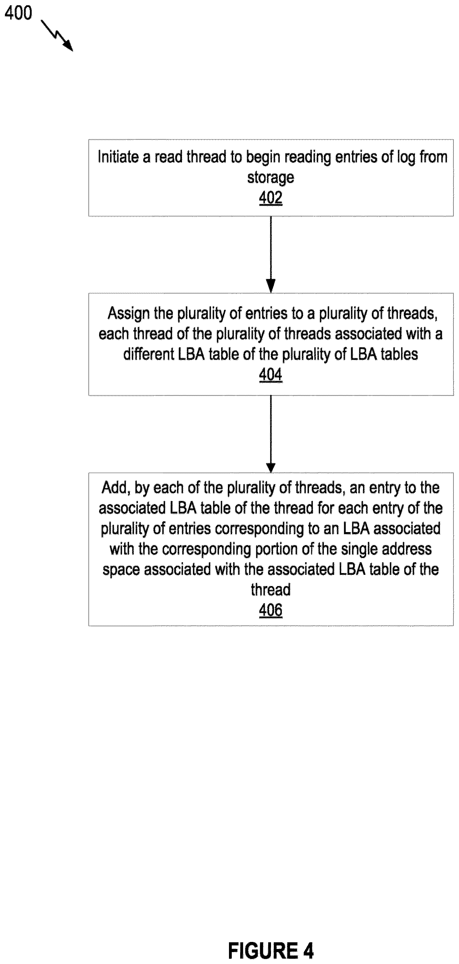

Figure 4 illustrates a flowchart of an example process 400 for LSOM sub-module 136 to recover the plurality of LBA tables 142, such as based on a failure of a host 102.

At 402, LSOM sub-module 136 causes a read thread to begin reading log entries 206 of log 144 from storage.

At 404, LSOM sub-module 136 assigns/passes the log entries 206 to a plurality of threads for processing the log entries in parallel. For example, a number of the plurality of threads may be equal to a number of the plurality of LBA tables 142 to be recovered. Each thread of the plurality of threads may be associated with a different LBA table of the plurality of LBA tables 142, such that there is a one-to-one mapping. In other aspects, there may be a one-to-many mapping, where a given thread is associated with multiple LBA tables, but there are still multiple threads.

In certain aspects, each thread of the plurality of threads receives the same log entries 206, such that a given thread may receive some log entries 206 having an LBA associated with an LBA table associated with the thread, and some log entries 206 having an LBA associated with an LBA table not associated with the thread. This may further parallelize processing of the log entries 206, as opposed to having the read thread parse which log entry 206 goes to which thread of the plurality of threads based on an LBA in the log entry 206, though that is another possible embodiment.

At 406, each thread of the plurality of threads processes log entries having an LBA associated with an LBA table associated with the thread and adds a corresponding entry in the LBA table associated with the thread. Accordingly, the plurality of LBA tables 142 may be recovered in parallel by the plurality of threads.

Figure 5 illustrates the disposition of a plurality of LBA tables for a given host 102 in an embodiment 500 of the present disclosure. In the present embodiment 500, the capacity-tier datastore 118 includes a plurality of physical disks 504A, 504B and 504C (collectively referenced by reference numeral 504) of a local storage 112 of the given host 102. Three physical disks 504 are shown in Figure 5 for simplicity, however, in practice, the local storage 112 of a host 102 may include any number of physical disks 504 that make up part of capacity-tier datastore 118. Moreover, in some implementations, the physical disks 504 may be of similar size, while in other implementations, the physical disks 504 may be of different sizes, depending on the storage architecture employed by the VSAN 116.

In embodiment 500, the number of LBA tables 142 for host 102 corresponds to the number of physical disks 504 of local storage 112 of host 102 that are part of the capacity-tier datastore 118. Thus, in the example shown in Figure 5, three LBA tables 142 (individually referenced by reference numerals 142A, 142B, 142C) are employed. Each LBA table 142, in embodiment 500, is assigned to a corresponding one of the physical disks 504 of the capacity-tier datastore 118. The LBAs 506, meaning entries of LBA tables 142 with LBAs 506, of the single address space are assigned to one of the three LBA tables 142 based on which physical disk 504 of the capacity-tier datastore 118 the entry is associated with. In particular, as discussed, each entry may map an LBA 506 to a physical address of a particular physical disk 504 where the data associated with LBA 506 is to be stored. Accordingly, the entry may be included in the LBA table 142 associated with such physical disk 504.

For example, entries for LBA 506A, LBA 506D and LBA 506G are included in LBA table 142A because the corresponding physical addresses of where the corresponding data is to be stored are associated with physical disk 504A. Entries for LBA 506B, LBA 506E and LBA 506H are included in LBA table 142B because the corresponding physical addresses of where the corresponding data is to be stored are associated with physical disk 504B. Entries for LBA 506C and LBA 506F are included in LBA table 142C because the corresponding physical addresses of where the corresponding data is to be stored are associated with physical disk 504C.

In embodiment 500, the entries for LBAs 506 are distributed based on which of the plurality of local physical disks 504 of the capacity-tier 118 the corresponding data will be stored. The LBA tables 142, of embodiment 500, may reference LBAs that are adjacent to one another, arbitrarily distributed across the single address space, distributed in a particular pattern, or any combination, as long as the LBAs referenced by the LBA table 142 are associated with data stored on the same local physical disk 504 of the capacity-tier 118.

Embodiment 500, shown in Figure 5, assigns an individual LBA table 142 to each of the physical disks 504 of the capacity-tier datastore 118. However, other strategies for assigning the plurality of LBA tables 142 may be employed, such as in embodiment 600, shown in Figure 6.

In embodiment 600, the number of LBA tables 142 may be determined based on criteria such as the size and/or number of physical disks 504 of a host 102 that make up part of capacity-tier datastore 118, the number of threads that can be allocated to a recovery process, or other appropriate criteria. However, for conciseness and to facilitate description of the present embodiment, three LBA tables 142 (individually referenced by reference numerals 142A, 142B, and 142C) are employed. In certain aspects, the LBA tables 142, in embodiment 600, are collectively assigned to local storage 112 of the capacity-tier datastore 118.

The LBAs 506 of the single address space are assigned to one of the three LBA tables 142, as sets of LBAs 506. Each set of LBAs includes a plurality of contiguous LBAs, wherein contiguous LBAs are contiguous in address. In certain aspects, the number of contiguous LBAs included in a set is based on a defined size of the set, such as corresponding to 1 GB worth of data associated with the contiguous LBAs. In certain aspects, a given LBA table 142 may be assigned one or more sets of LBAs 506. In certain aspects, sets of LBAs 506 may be assigned to LBA tables 142 in a round-robin fashion. For example, the entire single address space of LBAs may be divided into a plurality of sets. Sets may then be assigned in round-robin fashion (e.g., starting from a set with a lowest LBA in the single address space and continuing with sets with higher LBAs) to LBA tables 142, such as a first set to LBA table 142A, a second set to LBA table 142B, a third set to LBA table 142C, a fourth set to LBA table 142A, etc.

For example, in embodiment 600, LBA table 142A may be assigned a first set of contiguous LBAs 506 (e.g., LBAs 506A, 506B and 506C). The next set of contiguous LBAs 506 (represented by LBAs 506D, 506E and 506F) are assigned to LBA table 142B. Further, the next set of contiguous LBAs 506 (represented by LBAs 506G and 506H) are assigned to LBA table 142C.

As noted above, some embodiments may perform an LBA table recovery process in a parallelized or semi-parallelized fashion. This parallelization is accomplished utilizing the log structure shown in Figure 2 and generating multiple LBA tables 142 to represent separate portions of the single address space corresponding to capacity-tier storage of the host 102. By generating multiple LBA tables 142 to represent the single address space, separate threads may be used by an LBA table recovery process. Thus, in some embodiments of the present disclosure, a read thread locates the first log block 200, reads the first log block 200 (or a group of log blocks 200 where a number of log blocks 200 are stored contiguously), and passes the first log block 200, or group of log blocks 200 to multiple processing threads. In some embodiments, each LBA table 142 corresponds to a respective processing thread, such that the number of processing threads equals the number of LBA tables 142. In other embodiments, a processing thread may correspond to more than one LBA table 142. Each processing thread receives and processes each log block 200, and extracts only the entries identifying LBAs associated with the processing thread's respective LBA table 142. In this way each LBA table 142 is being rebuilt separately and concurrent by at least one dedicated thread. To further speed the LBA table 142 recovery process, the read thread advances to the next log block 200 or group of log blocks 200.

As used herein the terms parallel, concurrent and the like are used to convey that the threads are processing log blocks during the same time period. However, the terms parallel, concurrent and the like are not intended nor should be construed to require a lock-step progression. Depending on particular circumstances one processing thread may have more entries to process in a given grouping of log blocks 200 than another processing thread, and thus a processing thread may lag behind or lead other processing threads without deviating from the scope of the present disclosure.

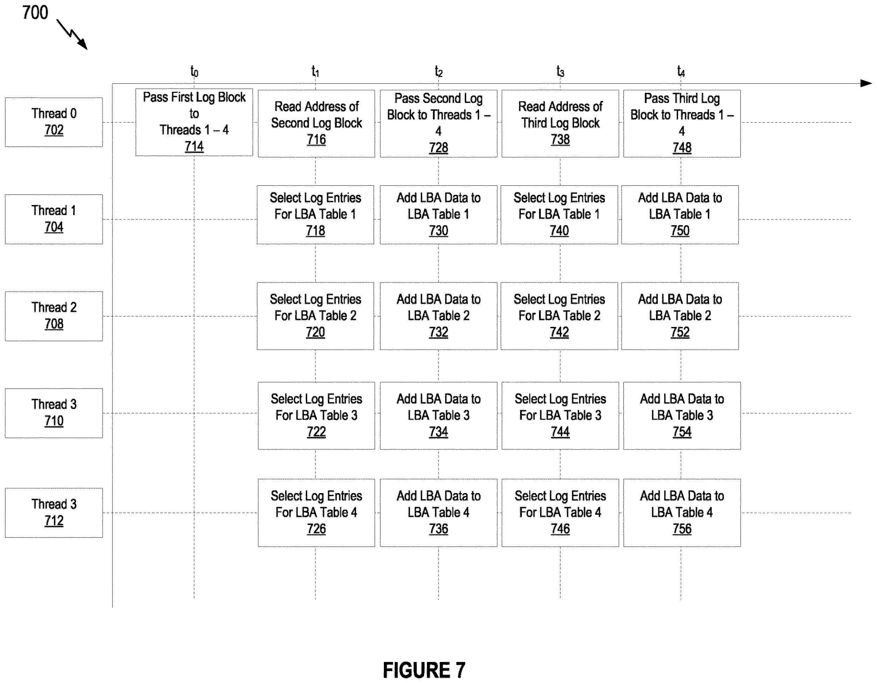

Figure 7, below, describes an example processing of log blocks 200 during an LBA table recovery process 700. The LBA table recovery process 700 is simplified to facilitate a concise explanation of the LBA table recovery process 700. Thus, certain real-world constraints are not considered, for example, the threads are shown and described in a case where no processing lag occurs and processing is fully synchronized in time.

An LBA table recovery process 700, in accordance with the present disclosure, will now be described with respect to the process diagram shown in Figure 7. The LBA table recovery process 700 uses five threads, thread-0 702 operates as a log block read thread, thread-1 704 is assigned to process log entries for LBA table-1 of the plurality of LBA tables (e.g., LBA tables 142 in Figure 1), thread-2 708 is assigned to process log entries for LBA table-2 of the plurality of LBA tables 142, thread-3 710 is assigned to process log entries for LBA table-3 of the plurality of LBA tables 142, and thread-4 712 is assigned to process log entries for LBA table-4 of the plurality of LBA tables 142.

At processing interval t₀ thread-0 702 passes, at 714, a first log block or group of log blocks (e.g., of log 144 in Figure 1) to thread-1 704, thread-2 708, thread-3 710 and thread-4 712.

At processing interval t₁ thread-0 702 reads, at 716, the address of a second log block or group of log blocks. At the same processing interval, thread-1 704 selects, at 718, any log entries (e.g., log entries 206 in Figure 2) that reference LBAs (e.g., 506 in Figure 5) associated with LBA Table-1 of the plurality of LBA tables 142 from among all the log entries 206 in the first log blocks or group of log blocks. Thread-2 708 selects, at 720, any log entries 206 that reference LBAs 506 associated with LBA Table-2 of the plurality of LBA tables 142 from among all the log entries 206 in the first log blocks or group of log blocks. Thread-3 710 selects, at 722, any log entries 206 that reference LBAs 506 associated with LBA Table-3 of the plurality of LBA tables 142 from among all the log entries 206 in the first log blocks or group of log blocks. Thread-4 712 selects, at 726, any log entries 206 that reference LBAs 506 associated with LBA Table-4 of the plurality of LBA tables 142 from among all the log entries 206 in the first log blocks or group of log blocks.

At processing interval t₂ thread-0 702 passes, at 728, the second log block or group of log blocks to thread-1 704, thread-2 708, thread-3 710, and thread-4 712. At the same processing interval, thread-1 704 adds, at 730, the LBA data from any selected log entries 206 to LBA Table-1 of the plurality of LBA tables 142. Thread-2 708 adds, at 732, the LBA data from any selected log entries 206 to LBA Table-2 of the plurality of LBA tables 142. Thread-3 710 adds, at 734, the LBA data from any selected log entries 206 to LBA Table-3 of the plurality of LBA tables 142. Thread-4 712 adds, at 736, the LBA data from any selected log entries 206 to LBA Table-4 of the plurality of LBA tables 142.

At processing interval t₃ thread-0 702 reads, at 738, the address of a third log block or group of log blocks. At the same processing interval, thread-1 704 selects, at 740, any log entries 206 that reference LBAs 506 associated with LBA Table-1 of the plurality of LBA tables 142 from among all the log entries 206 in the second log blocks or group of log blocks. Thread-2 708 selects, at 742, any log entries 206 that reference LBAs 506 associated with LBA Table-2 of the plurality of LBA tables 142 from among all the log entries 206 in the second log blocks or group of log blocks. Thread-3 710 selects, at 744, any log entries 206 that reference LBAs 506 associated with LBA Table-3 of the plurality of LBA tables 142 from among all the log entries 206 in the second log blocks or group of log blocks. Thread-4 712 selects, at 746, any log entries 206 that reference LBAs 506 associated with LBA Table-4 of the plurality of LBA tables 142 from among all the log entries 206 in the second log blocks or group of log blocks.

At processing interval t₄ thread-0 702 passes, at 748, the third log block or group of log blocks to thread-1704, thread-2 708, thread-3 710 and thread-4 712. At the same processing interval, thread-1 704 adds, at 750, the LBA data from any selected log entries 206 of the second log block or group of log blocks to LBA Table-1 of the plurality of LBA tables 142. Thread-2 708 adds, at 752, the LBA data from any selected log entries 206 of the second log block or group of log blocks to LBA Table-2 of the plurality of LBA tables 142. Thread-3 710 adds, at 754, the LBA data from any selected log entries 206 of the second log block or group of log blocks to LBA Table-3 of the plurality of LBA tables 142. Thread-4 712 adds, at 756, the LBA data from any selected log entries 206 of the second log block or group of log blocks to LBA Table-4 of the plurality of LBA tables 142.

The LBA table recovery process 700 continues in this manner until all log blocks of log 144 have been processed by the threads and the plurality of LBA tables 142 have been rebuilt.

The various embodiments described herein may employ various computer-implemented operations involving data stored in computer systems. For example, these operations may require physical manipulation of physical quantities usually, though not necessarily, these quantities may take the form of electrical or magnetic signals where they, or representations of them, are capable of being stored, transferred, combined, compared, or otherwise manipulated. Further, such manipulations are often referred to in terms, such as producing, identifying, determining, or comparing. Any operations described herein that form part of one or more embodiments may be useful machine operations. In addition, one or more embodiments also relate to a device or an apparatus for performing these operations. The apparatus may be specially constructed for specific required purposes, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

The various embodiments described herein may be practiced with other computer system configurations including hand-held devices, microprocessor systems, microprocessor-based or programmable consumer electronics, minicomputers, mainframe computers, and the like.

One or more embodiments may be implemented as one or more computer programs or as one or more computer program modules embodied in one or more computer readable media. The term computer readable medium refers to any data storage device that can store data which can thereafter be input to a computer system computer readable media may be based on any existing or subsequently developed technology for embodying computer programs in a manner that enables them to be read by a computer. Examples of a computer readable medium include a hard drive, network attached storage (NAS), read-only memory, random-access memory (e.g., a flash memory device), NVMe storage, Persistent Memory storage, a CD (Compact Discs), CD-ROM, a CD-R, or a CD-RW, a DVD (Digital Versatile Disc), a magnetic tape, and other optical and non-optical data storage devices. The computer readable medium can also be distributed over a network coupled computer system so that the computer readable code is stored and executed in a distributed fashion.

In addition, while described virtualization methods have generally assumed that virtual machines present interfaces consistent with a particular hardware system, the methods described may be used in conjunction with virtualizations that do not correspond directly to any particular hardware system. Virtualization systems in accordance with the various embodiments, implemented as hosted embodiments, non-hosted embodiments, or as embodiments that tend to blur distinctions between the two, are all envisioned. Furthermore, various virtualization operations may be wholly or partially implemented in hardware. For example, a hardware implementation may employ a look-up table for modification of storage access requests to secure non-disk data.

Many variations, modifications, additions, and improvements are possible, regardless the degree of virtualization. The virtualization software can therefore include components of a host, console, or guest operating system that performs virtualization functions. Plural instances may be provided for components, operations or structures described herein as a single instance. Finally, boundaries between various components, operations and datastores are somewhat arbitrary, and particular operations are illustrated in the context of specific illustrative configurations. Other allocations of functionality are envisioned and may fall within the scope of one or more embodiments. In general, structures and functionality presented as separate components in exemplary configurations may be implemented as a combined structure or component. Similarly, structures and functionality presented as a single component may be implemented as separate components. These and other variations, modifications, additions, and improvements may fall within the scope of the appended claims(s). In the claims, elements and/or steps do not imply any particular order of operation, unless explicitly stated in the claims.

## Claims

1. A method for data storage, the method comprising:
receiving a first input/output (I/O) operation indicating a first logical block address (LBA) of a single address space, wherein the single address space corresponds to storage across a first plurality of storage devices;
determining that a first LBA table of a plurality of LBA tables is associated with the first LBA, wherein each of the plurality of LBA tables is associated with a different corresponding portion of the single address space;
storing data corresponding to the first I/O operation at a first physical address of a first storage device of a second plurality of storage devices; and
adding a first entry to the first LBA table, the first entry mapping the first LBA to the first physical address.

2. The method of claim 1, wherein
each of the plurality of LBA tables is associated with a different storage device of the first plurality of storage devices.

3. The method of claim 2, wherein one or more bits of the first LBA identify one of the first plurality of storage devices.

4. The method of any one of the claims 1 to 3, wherein
the first entry further maps the first LBA to a second physical address of a second storage device of the first plurality of storage devices.

5. The method of any one of the claims 1 to 4, wherein
each of the plurality of LBA tables is associated with a corresponding plurality of sets of LBAs, each set of the corresponding plurality of sets of LBAs including a plurality of contiguous LBAs, and each set of the corresponding plurality of sets of LBAs not being contiguous with other sets of the corresponding plurality of sets of LBAs.

6. The method of any one of the claims 1 to 5, further comprising
storing a first log entry corresponding to the first I/O operation in a log stored in the second plurality of storage devices, the log storing a plurality of entries corresponding to a plurality of I/O operations.

7. The method of claim 6, further comprising recovering the plurality of LBA tables, the recovering comprising:
assigning the plurality of entries to a plurality of threads, each thread of the plurality of threads associated with a different LBA table of the plurality of LBA tables; and
adding, by each of the plurality of threads, an entry to the associated LBA table of the thread for each entry of the plurality of entries corresponding to an LBA associated with the corresponding portion of the single address space associated with the associated LBA table of the thread.

8. The method of claim 7, wherein
the log is stored in a plurality of sets of contiguous log blocks.

9. A system for data storage comprising:
a first plurality of storage devices;
a second plurality of storage devices;
one or more memories comprising computer-executable instructions; and
one or more processors configured to execute the computer-executable instructions and cause the system to:
receive a first input/output (I/O) operation indicating a first logical block address (LBA) of a single address space, wherein the single address space corresponds to storage across the first plurality of storage devices;
determine that a first LBA table of a plurality of LBA tables is associated with the first LBA, wherein each of the plurality of LBA tables is associated with a different corresponding portion of the single address space;
store data corresponding to the first I/O operation at a first physical address of a first storage device of the second plurality of storage devices; and
add a first entry to the first LBA table, the first entry mapping the first LBA to the first physical address.

10. The system of claim 9, wherein
the first entry further maps the first LBA to a second physical address of a second storage device of the first plurality of storage devices.

11. The system of claim 9 or 10, wherein
each of the plurality of LBA tables is associated with a corresponding plurality of sets of LBAs, each set of the corresponding plurality of sets of LBAs including a plurality of contiguous LBAs, and each set of the corresponding plurality of sets of LBAs not being contiguous with other sets of the corresponding plurality of sets of LBAs.

12. The system of any one of the claims 9 to 11, wherein
the one or more processors are further configured to execute the computer-executable instructions and cause the system to
store a first log entry corresponding to the first I/O operation in a log stored in the second plurality of storage devices, the log storing a plurality of entries corresponding to a plurality of I/O operations.

13. The system of claim 12, wherein
the one or more processors are further configured to execute the computer-executable instructions and cause the system to recover the plurality of LBA tables, the recovering comprising:
assigning the plurality of entries to a plurality of threads, each thread of the plurality of threads associated with a different LBA table of the plurality of LBA tables; and
adding, by each of the plurality of threads, an entry to the associated LBA table of the thread for each entry of the plurality of entries corresponding to an LBA associated with the corresponding portion of the single address space associated with the associated LBA table of the thread.

14. The system of claim 13, wherein
the log is stored in a plurality of sets of contiguous log blocks.

15. One or more non-transitory computer-readable media storing instructions, which when executed by one or more processors of a computer system, cause the computer system to perform a method as set forth in any one of the preceding method claims.
